# EUROPEAN PATENT APPLICATION

(11) **EP 4 648 207 A1**
(43) Date of publication of application: **12.11.2025**
(21) Application number: 24803643.6
(22) Date of filing: 30.04.2024
(51) Int. Cl.: H01M 50/521, H01M 50/524, H01M 50/526, H01M 50/211, H01M 50/251, H01M 50/503

(54) **BATTERY MODULE, BATTERY PACK, AND ENERGY STORAGE SYSTEM**

(30) Priority: 11.05.2023 KR 20230060976
(71) Applicant: LG Energy Solution, Ltd., Seoul 07335 (KR)
(72) Inventor: CHOI, Gyuwan, Daejeon 34122 (KR)
(74) Representative: Plasseraud IP
(86) International application number: PCT/KR2024/005878
(87) International publication number: WO 2024/232589

(57) **Abstract**

A battery module according to one embodiment of the present disclosure comprises a battery cell stack in which a plurality of battery cells are stacked, a busbar frame formed on one surface or both surfaces of the battery cell stack, and a busbar electrically connected to the electrode lead of the battery cell stack on the outer surface of the busbar frame, wherein the busbar includes a busbar body connected to the electrode lead and a heat-resistant member interposed between the busbar and the busbar frame.

## Description

### [TECHNICAL FIELD]

### Cross Citation with Related Application(s)

This application claims the benefit of Korean Patent Application No. 10-2023-0060976 filed on May 11, 2025 in the Korean Intellectual Property Office, the disclosure of which is incorporated herein by reference in its entirety.

### [BACKGROUND]

In modern society, as portable devices such as a mobile phone, a notebook computer, a camcorder and a digital camera, and an energy storage system (ESS) have been daily used, technologies of a field related thereto has been actively developed. In addition, as a secondary battery capable of being charged and discharged is used as a power source for an electric vehicle (EV), a hybrid electric vehicle(HEV), a plug-in hybrid electric vehicle (P-HEV) and the like as a method for solving air pollution and the like caused by existing gasoline vehicles using fossil fuel, a necessity for the development of the secondary battery is increasing.

Currently commercialized secondary batteries include a nickel cadmium battery, a nickel hydrogen battery, a nickel zinc battery, a lithium secondary battery, and the like, and among them, the lithium secondary battery has come into the spotlight because it has advantages, for example, being freely charged and discharged, and having very low self-discharge rate and high energy density.

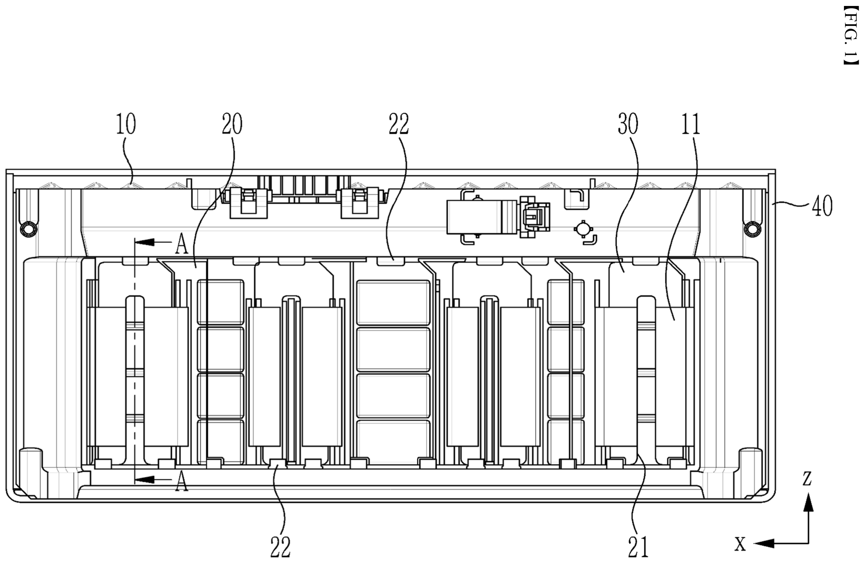

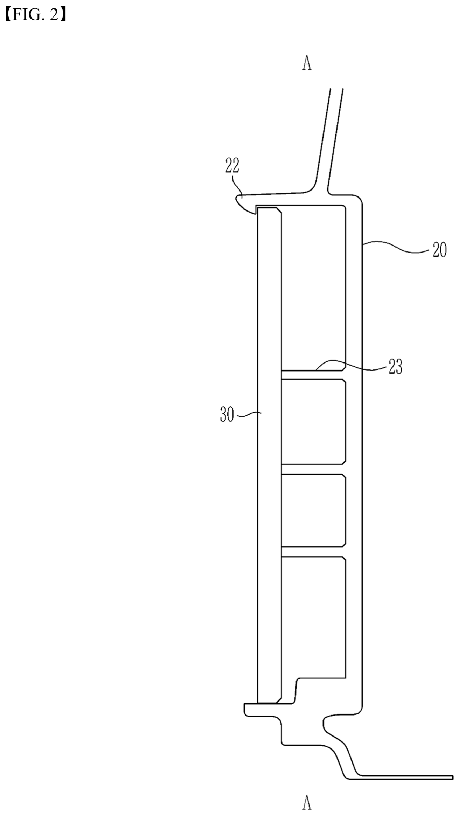

FIG. 1 shows a front view of a battery module equipped with a busbar 30 according to the prior art. FIG. 2 shows a cross-sectional view taken along line A-A in FIG. 1. It shows a front view of the battery module or battery pack after the electrode lead 11 is welded to the busbar 30. The battery module includes a battery cell stack in which a plurality of battery cells 10 are stacked, an electrode lead 11 each protruding from one or both ends of the battery cells 10, a busbar frame 20, a busbar 30, and end plates 40 at both ends of the battery cell stack. The electrode lead 11 passes through the open slit 22 of the busbar frame 20 and is welded to the busbar 30 on the outer surface of the busbar frame 20. The electrode lead 11 may be electrically connected to the busbar 30. The busbar 30 is made from a metal material, and for example, includes copper, aluminum, or a mixture thereof.

According to the prior art in FIG. 1, the busbar frame 20 includes hook-shaped fixing parts 22 at each of the upper part and the lower end, and the busbar 30 may be fixed to the outer surface of the busbar frame 20 by the hook-shaped fixing parts 22. The cross-sectional view of FIG. 2 also shows that the busbar 30 is hook-coupled to the hook-shaped fixing part 22. The upper fixing part 22 has a snap fit structure, and the lower fixing part 22 has a guide rib structure.

In addition, the busbar frame 20 further includes a busbar support part 23, and the busbar 30 is supported by the busbar support part 23. Therefore, the busbar support part 23 supports the busbar 30 when the busbar 30 is welded or when a battery module or battery pack is actually used.

Meanwhile, by reducing the thickness of the busbar, the cost of materials going into the production of a busbar can be reduced and an increase in the energy density of the battery module and/or battery pack can be achieved. However, heat generated from the busbar during charging and discharging of the battery cells is transferred to the busbar frame due to a reduction in the thickness of the busbar, and the injection-molded busbar frame may be thermally deformed. For example, the fixing part 22 and/or the busbar support part 23 of the busbar frame 20 shown in FIG. 2 may be thermally deformed, and in some cases, the main body of the busbar frame 20 may also be thermally deformed.

Therefore, there is a need to develop a method capable of preventing deformation of the busbar frame by blocking heat transfer from the busbar to the busbar frame while reducing the thickness of the busbar.

### [DETAILED DESCRIPTION OF THE INVENTION]

### [Technical Problem]

It is an objective of the present disclosure to provide a battery module, a battery pack, and an energy storage system, which can prevent deformation of the busbar frame due to an increase in the temperature of the busbar while reducing the thickness of the busbar.

However, the objective of the present disclosure is not limited to the aforementioned one, and may be extended in various ways within the scope of the technical idea included in the present disclosure.

### [Technical Solution]

According to one embodiment of the present disclosure, there is provided a battery module comprising: a battery cell stack in which a plurality of battery cells are stacked, a busbar frame formed on one surface or both surfaces of the battery cell stack, and a busbar electrically connected to the electrode lead of the battery cell stack on the outer surface of the busbar frame, wherein the busbar includes a busbar body connected to the electrode lead and a heat-resistant member interposed between the busbar and the busbar frame.

The heat-resistant member may include a heat-fused part that allows the heat-resistant member to be heat-fused to the busbar frame.

At least one of the edges of the busbar body includes a concave part, and the heat-resistant member may be exposed in the concave part to provide the heat-fused part.

When viewed from the front, the busbar body and the heat-resistant member have the same shape, wherein the busbar body further includes the concave part.
the exposed heat-resistant member is provided with a hole, and the heat-resistant member may be joined to the busbar frame through the hole.

The heat-fused part may be spaced away from the edge of the concave part of the busbar body by a predetermined distance.

The heat-fused part and the concave part of the busbar body may be provided at two corners of the busbar diagonally opposed relative to one another.

The heat-fused part may be made from the same material as the busbar frame.

The busbar body may be made from a metal material, and the heat-resistant member may be made of a material having a glass transition temperature (Tg) higher than the maximum elevated temperature during charging and discharging of the battery cells of the busbar body.

The heat-resistant member may include a polymer having a middle glass transition temperature (middle Tg) or a high glass transition temperature (high Tg).

The busbar body and the heat-resistant member may be bonded to each other with an adhesive.

The adhesive may be a heat-resistant epoxy-based adhesive.

The thickness of the busbar body may be 20% to 80% of the whole thickness of the busbar.

The busbar includes a slit through which the electrode lead passes, wherein the slit may be integrally formed at the same positions in the busbar body and the heat-resistant member.

According to another embodiment of the present disclosure, there may be provided a battery pack comprising the battery module according to the above-mentioned embodiments.

According to yet another embodiment of the present disclosure, there may be provided an energy storage system comprising the battery pack according to the above-mentioned embodiments.

### [Advantageous Effects]

According to the present disclosure, by reducing the thickness of the busbar, the cost of materials going into the production of a busbar can be reduced and an increase in the energy density of the battery module and/or battery pack can be achieved. In addition, despite the reduction in the thickness of the busbar, deformation of the busbar frame due to an increase in the temperature of the busbar can be prevented.

Effects of the present disclosure are not limited to the effects mentioned above, and additional other effects not mentioned herein will be clearly understood by a person of ordinary skill in the art from the description of the appended claims.

### [BRIEF DESCRIPTION OF THE DRAWINGS]

FIG. 1 is a front view of a battery module equipped with a busbar according to the prior art.
FIG. 2 shows a cross-sectional view taken along line A-A in FIG. 1.
FIG. 3 is a front view showing a battery module according to an embodiment of the present disclosure.
FIG. 4 is a perspective view of a busbar that can be mounted on the battery module as one component of the battery module of FIG. 3.
FIG. 5 is an exploded perspective view of the busbar of FIG. 4.
FIG. 6 is an enlarged view of a portion of FIG. 3, showing a case where the busbar of FIG. 3 is mounted.
FIG. 7 shows a comparison table between the characteristics of high Tg FR-4 and the characteristics of FR-4.

### [DETAILED DESCRIPTION OF THE EMBODIMENTS]

Hereinafter, various embodiments of the present disclosure will be described in detail with reference to the accompanying drawings so that those skilled in the art can easily carry out them. The present disclosure may be modified in various different ways, and is not limited to the embodiments set forth herein.

Portions that are not related to the description will be omitted to clearly describe the present disclosure, and same reference numerals designate same or like elements throughout the description.

Further, in the drawings, the size and thickness of each element are arbitrarily illustrated for convenience of description, and the present disclosure is not necessarily limited to those illustrated in the drawings. In the drawings, the thickness of layers, regions, etc. are exaggerated for clarity. In the drawings, for convenience of description, the thicknesses of some layers and regions are exaggerated.

Further, it will be understood that when an element such as a layer, film, region, or plate is referred to as being "on" or "above" another element, it can be directly on the other element or intervening elements may also be present. In contrast, when an element is referred to as being "directly on" another element, it means that other intervening elements are not present. Further, a certain part being located "above" or "on" a reference portion means the certain part being located above or below the reference portion and does not particularly mean the certain part "above" or "on" toward an opposite direction of gravity.

Further, throughout the description, when a portion is referred to as "including" or "comprising" a certain component, it means that the portion can further include other components, without excluding the other components, unless explicitly described to the contrary.

Further, throughout the description, when referred to as "planar", it means when a target portion is viewed from the upper side, and when it is referred to as "cross-sectional", it means when a target portion is viewed from the side of a cross section cut vertically.

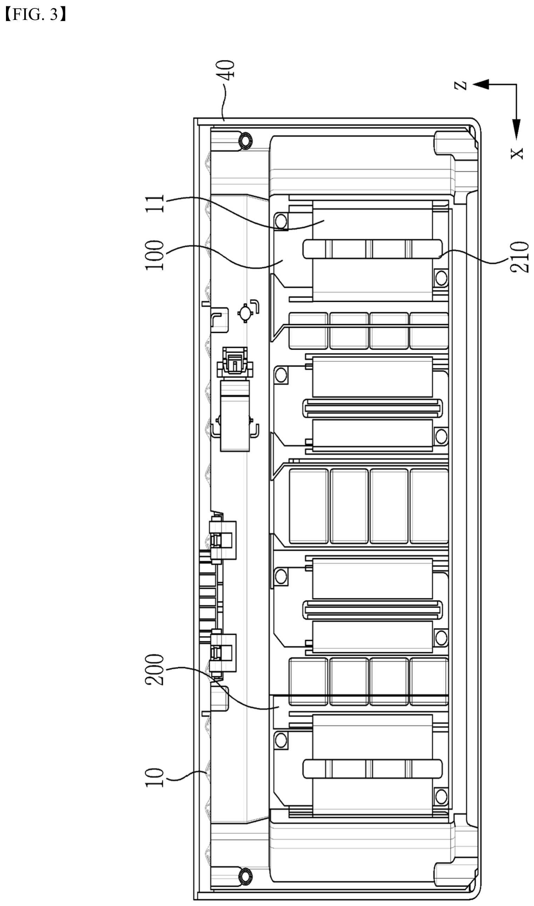

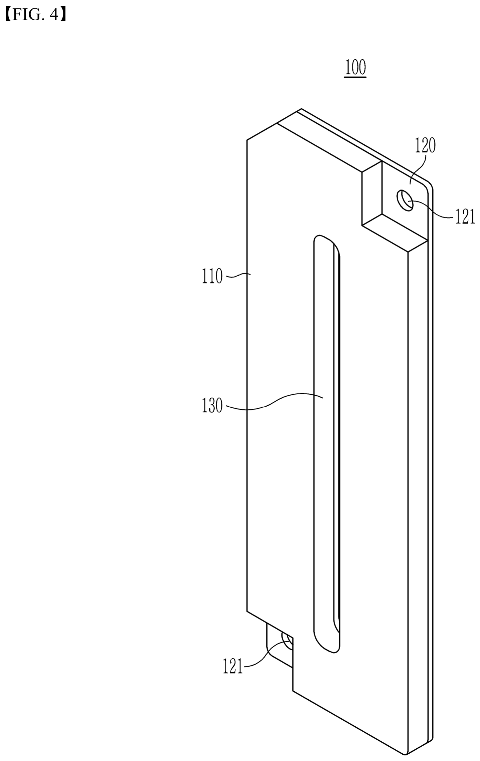

Now, a battery module according to an embodiment of the present disclosure will be described with reference to FIGS. 3 and 4.

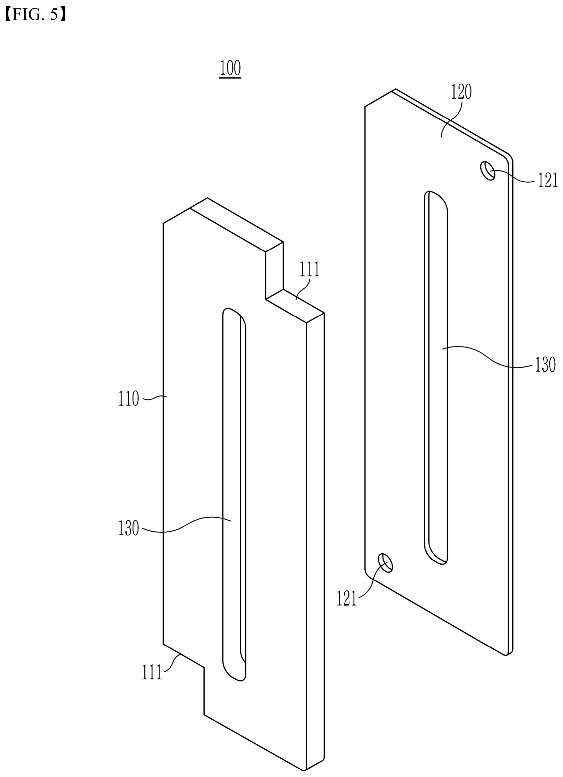

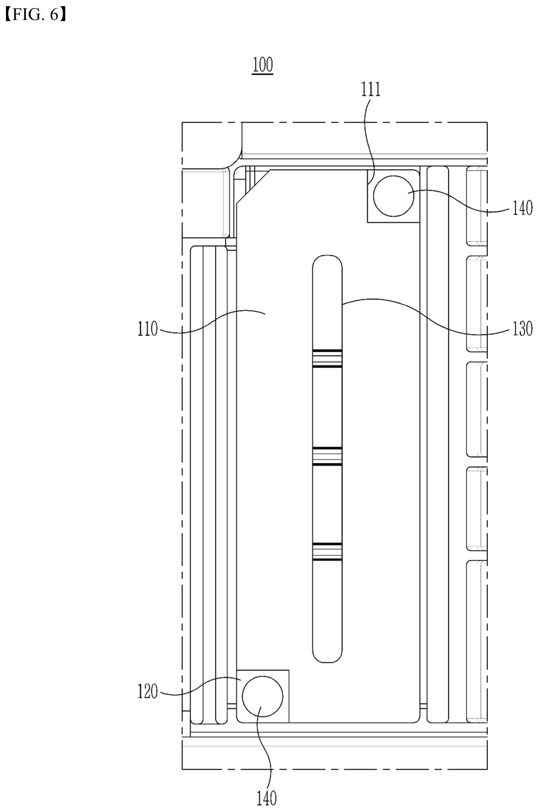

FIG. 3 is a front view showing a battery module according to an embodiment of the present disclosure. FIG. 4 is a perspective view of a busbar that can be mounted on the battery module as one component of the battery module of FIG. 3. FIG. 5 is an exploded perspective view of the busbar of FIG. 4. FIG. 6 is an enlarged view of a portion of FIG. 3, showing a case where the busbar of FIG. 3 is mounted.

Referring to FIG. 3, the battery module according to the present embodiment includes a battery cell stack in which a plurality of battery cells 10 are stacked, electrode leads 11 each protruding from one or both ends of the battery cell stack, a busbar 100 and a busbar frame 200.

First, the battery cell 10 is a secondary battery, and may be configured, for example, as a pouch-type secondary battery. The battery cells 10 may be configured in plurality, and a plurality of battery cells 10 are stacked so as to be electrically connected to each other, thereby forming a battery cell stack.

The busbar 100 is welded to the electrode lead 11 and is electrically connected to the electrode lead 11. The busbar frame 200 includes a plurality of slits 210, and the busbar 100 is arranged to correspond to the slits 210. The electrode lead 11 passes through the slit 210 and is joined to the busbar 100. The busbar frame 200 may be formed, for example, through injection molding from a plastic, and the material of the busbar frame 200 may be made from a material used for a typical busbar frame 200.

Referring to FIGS. 4 and 5, the busbar 100 may be largely composed of two layers. It consists of a busbar body 110 electrically connected to the electrode lead 11, and a heat-resistant member 120.

The busbar body 110 is made from a metal material, and may include, for example, any one selected from copper, iron, aluminum, and alloys thereof. The busbar body 110 is joined with the electrode lead 11 by welding. The electrode lead 11 passes through the slit 130 of the busbar 100 or the space between adjacent busbars 100 and overlaps on one surface of the busbar body 110 (one surface facing the outside of the battery module). The electrode lead 11 and the busbar 100 are electrically connected by welding a portion where the electrode lead 11 and the busbar body 110 are overlapped with each other.

The heat-resistant member 120 is interposed between the busbar body 110 and the busbar frame 200. Thereby, it prevents the heat generated in the busbar body 110 during charging and discharging of the battery cells 10 from being transferred to the injection molded busbar frame 200 and prevents the busbar frame 200 from being thermally deformed.

More specifically, the busbar frame 200 is typically made from a plastic. Conventionally, when the thickness of the busbar body 110 made of a metal is reduced, more heat is generated in the busbar body 110 due to resistance, which may cause thermal deformation of the busbar frame 200. However, according to the present disclosure, a heat-resistant member 120 is provided between the busbar body 110 and the busbar frame 200, whereby the heat generated in the busbar body 110 is prevented from being transmitted to the busbar frame 200, thereby preventing thermal deformation of the busbar frame 200.

The heat-resistant member 120 is formed in a plate shape, and may cover at least one surface of the busbar body 110. More specifically, the heat-resistant member 120 may cover the rear surface facing the busbar frame among both surfaces (front and rear) having a large area of the busbar body 110. The size of the large area of the heat-resistant member 120 may be equal to or larger than the size of the large area of the busbar body 110. The slit 130 is integrally formed at the same positions in the busbar body 110 and the heat-resistant member 120.

According to the prior art, the busbar 30 is hook-coupled to the busbar frame 20 by a fixing part 22 (see FIG. 1) having a snap fit structure and a guide lip structure.

On the other hand, according to one embodiment of the present disclosure, the busbar 100 is coupled to the busbar frame 200 by heat fusion. That is, the fixing part 22 having a snap fit structure and a guide lip structure in the busbar frame 200 was eliminated. Instead, as shown in FIG. 6, the busbar 100 is coupled to the busbar frame 200 with a heat-fused part 140. For this purpose, as shown in FIGS. 4 to 6, at least one corner of the busbar body 110 is cut to expose the heat-resistant member 120. The heat-fused part 140 may be made from the same material as the busbar frame 200.

The heat-resistant member 120 may be made from a material having a glass transition temperature(Tg) higher than the maximum elevated temperature of the busbar body 110. The heat-resistant member 120 may include, for example, a polymer having a middle glass transition temperature (middle Tg) or a high glass transition temperature (high Tg).

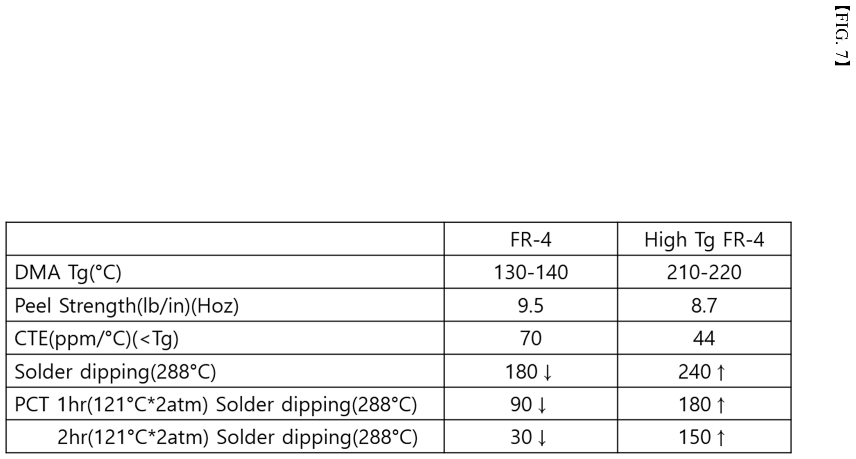

The heat-resistant member 120 may have, for example, a high Tg (high glass transition temperature). The glass transition temperature of the heat-resistant member 120 may be, for example, 170 degrees Celsius or more, or for example, 170 degrees Celsius or more and 300 degrees Celsius or less, or for example, 200 degrees Celsius or more and 250 degrees Celsius or less, or for example, about 210 degrees Celsius or more and 220 degrees Celsius or less, or for example, 210 degrees Celsius. Alternatively, the heat-resistant member 120 may include, for example, a high Tg FR-4 material, polysulfone, or polynorbornene. High Tg FR-4 may have, for example, the characteristics shown in FIG. 7. For reference, FIG. 7 exemplarily shows a comparison table between the characteristics of high Tg FR-4 and the characteristics of FR-4.

Alternatively, in some cases, when the maximum elevated temperature of the busbar body 110 is less than 140 degrees Celsius, the heat-resistant member 120 may have a high Tg (high glass transition temperature), but may also have a middle Tg (middle glass transition temperature). The glass transition temperature of the heat-resistant member 120 may be, for example, 150 degrees Celsius or more, or for example, 150 degrees Celsius or more and 300 degrees Celsius or less. In this case, the heat-resistant member 120 may include, for example, a middle Tg FR-4 material.

The busbar body 110 and the heat-resistant member 120 may be bonded with an adhesive. The adhesive may be an adhesive having heat resistance. For example, it may be a heat-resistant epoxy-based adhesive. For example, the adhesive may be provided in a sheet form, or may be provided in a paste form that is applied and then cured. When applied and then cured, it can be produced by a method such as a room temperature drying type, room temperature curing type, heat curing type, high temperature firing type, or UV curing type.

When viewed from the front (viewed from the outside of the busbar frame), the busbar body 110 and the heat-resistant member 120 have the same shape, but the busbar body 110 may further include a concave part 111 described hereinafter.

The heat-fused part 140 and the concave part 111 may be provided in at least one of the corners of the busbar 100, and may be provided at two corners of the busbar 100 diagonally opposed relative to one another, as shown in FIGS. 4 to 6. Alternatively, it may be provided at the whole edge of the busbar 100.

Meanwhile, as described above, a concave part 111 is provided in at least one corner so that the heat-fused part 140 is provided, and the heat-resistant member 120 is exposed accordingly. For example, the concave part 111 may have a concave shape that is recessed (indented) from the edge of the busbar body 110, and the concave part 111 may have a square or circular shape. As shown in FIGS. 4 to 6, the concave part 111 may be formed in a square shape, and the corners may have an angle of 90 degrees, for example. However, the present disclosure is not limited to the illustrated example, and it is sufficient as long as the heat-resistant member 120 is exposed and the heat-fused part 140 can be provided, and it can be manufactured in various shapes and structures. For example, various modifications and changes are possible, for example, the edges of the busbar body 110 may have a chamfered shape. The concave part 111 may be manufactured by cutting an edge of the busbar body 110, or may be manufactured by casting the busbar body 110 to have the shape of the concave part 111.

The concave part 111 of the busbar body 110 is a concave part in which the edge of the concave part 111 and the heat-sealed part 140 may be spaced apart by a predetermined distance so that the heat-fused part 140 is not affected by heat generated when welding the electrode lead 11 to the busbar body 110.

A hole 121 is provided on the exposed surface of the heat-resistant member 120. The busbar 100 may be joined to the busbar frame 200 by heat fusion through the hole 121. The heat-fused part 140 may be welded, for example, through the hole 121. The busbar 100, in which the busbar body 110 and the heat-resistant member 120 are bonded with an adhesive, can be joined to the busbar frame 200 by heat fusion using the heat-fused part 140. Alternatively, the heat-resistant member 120 may first be joined to the busbar frame 200 by heat fusion, and then the busbar body 110 may be attached by applying the above-described adhesive on the heat-resistant member 120.

According to such an embodiment of the present disclosure, it is possible to reduce the thickness by more than half compared to a conventional busbar made of a single metal material. For example, the thickness of the busbar body 110 may be 20% to 80%, or 30% to 70%, or 40% to 60%, of the whole thickness of the busbar 100 (the sum of the thicknesses of the busbar body 110 and the heat-resistant member 120).

A conventional busbar has a thickness of, for example, 3 mm, whereas according to an embodiment of the present disclosure, the thickness of the busbar body 110 can be reduced to, for example, 1.4 mm. In this case, the thickness of the heat-resistant member 120 may be, for example, 1.6 mm, but may also be less than that.

Compared to conventional busbars made of a single metal material, the thickness can be equal or reduced, and above all, by reducing the amount of metal required for producing the busbar, the overall production cost can be reduced. At the same time, the function of the busbar (electrical connection with electrode leads) can be maintained, and deformation of the busbar frame 200 due to the thermal resistance of the busbar can be prevented.

The busbar frame 200 shown in FIG. 3 combines the end plates 40 and the like to configure a battery module. The stack of the battery cell 10 may be housed in a module frame, but may also be provided in a module-less structure in which the module frame is eliminated. The end plate 40 can be a normal end plate.

Further, the battery module may be included in the battery pack. The battery pack may have a structure in which one or more of the battery modules according to the present embodiment are gathered, and packed together with a battery management system (BMS) and a cooling device that control and manage battery's temperature, voltage, etc.

A battery module and a battery pack comprising the same can be applied to various devices. Such a device can be applied to a vehicle means such as an electric bicycle, an electric vehicle, or a hybrid vehicle, and/or an energy storage system(ESS), but the present disclosure is not limited thereto, and is applicable to various devices that can use a battery module and a battery pack comprising the same, which is also falls under the scope of the present disclosure.

Although the invention has been described in detail above with reference to preferred embodiments thereof, it will be appreciated by those skilled in the art that the scope of the present disclosure is not limited thereto, and various modifications and improvements can be made in these embodiment without departing from the principles and sprit of the invention, the scope of which is defined in the appended claims and their equivalents.

### [Description of Symbols]

10: battery cell
11: electrode lead
20: busbar frame
30: busbar
40: end plate
100: busbar
110: busbar body
120: heat-resistant member
130: slit
140: heat-fused part
200: busbar frame
210: slit

## Claims

1. A battery module comprising:
a battery cell stack in which a plurality of battery cells are stacked;
a busbar frame formed on one surface or both surfaces of the battery cell stack; and
a busbar electrically connected to an electrode lead of the battery cell stack on an outer surface of the busbar frame,
wherein the busbar includes a busbar body connected to the electrode lead and a heat-resistant member interposed between the busbar and the busbar frame.

2. The battery module according to claim 1, wherein:
the heat-resistant member includes a heat-fused part that allows the heat-resistant member to be heat-fused to the busbar frame.

3. The battery module according to claim 2, wherein:
at least one of the edges of the busbar body includes a concave part, and the heat-resistant member is exposed in the concave part to provide the heat-fused part.

4. The battery module according to claim 3, wherein:
when viewed from the front, the busbar body and the heat-resistant member have the same shape, wherein the busbar body further includes the concave part.

5. The battery module according to claim 3, wherein:
the exposed heat-resistant member is provided with a hole, and the heat-resistant member is joined to the busbar frame through the hole.

6. The battery module according to claim 3, wherein:
the heat-fused part is spaced away from the edge of the concave part of the busbar body by a predetermined distance.

7. The battery module according to claim 3, wherein:
the heat-fused part and the concave part of the busbar body are provided at two corners of the busbar diagonally opposed relative to one another.

8. The battery module according to claim 3, wherein:
the heat-fused part is made from the same material as the busbar frame.

9. The battery module according to claim 1, wherein:
the busbar body is made from a metal material, and
the heat-resistant member is made of a material having a glass transition temperature (Tg) higher than the maximum elevated temperature during charging and discharging of the battery cells of the busbar body.

10. The battery module according to claim 1, wherein:
the heat-resistant member includes a polymer having a middle glass transition temperature (middle Tg) or a high glass transition temperature (high Tg).

11. The battery module according to claim 1, wherein:
the busbar body and the heat-resistant member are bonded to each other with an adhesive.

12. The battery module according to claim 11, wherein:
the adhesive is a heat-resistant epoxy-based adhesive.

13. The battery module according to claim 1, wherein:
a thickness of the busbar body is 20% to 80% of the whole thickness of the busbar.

14. The battery module according to claim 1, wherein:
the busbar includes a slit through which the electrode lead passes, wherein the slit is integrally formed at the same positions in the busbar body and the heat-resistant member.

15. A battery pack comprising the battery module according to claim 1.

16. An energy storage system comprising the battery pack according to claim 15.
